# EUROPEAN PATENT APPLICATION

(11) **EP 1 955 839 A2**
(43) Date of publication of application: **13.08.2008**
(21) Application number: 08250470.5
(22) Date of filing: 07.02.2008
(51) Int. Cl.: B29C 49/22, B29C 49/48, B29C 49/04, B29C 49/56

(54) **Method for molding and sealing hollow plastic tank**

(30) Priority: 08.02.2007 US 704642
(71) Applicant: Automotive Components Holdings, LLC, Dearborn, MI 48120 (US)
(72) Inventor: Harris, Mark A., Dexter, Michigan 48130 (US); Boehk, Michael J., Canton, Michigan 48187 (US); DeMaria, Joseph, New Hudson, Michigan 48165 (US); Knaggs, Richard, Fort Wayne, Indiana (US); Plansinis, Mark W., Dearborn Heights, Michigan 48127 (US); Potter, James, Livonia, Michigan 48150 (US); Kahler, Richard, Taylor, Michigan 48180 (US)
(74) Representative: Giles, Ashley Simon

(57) **Abstract**

A method for manufacturing a hollow parison includes forming a parison (10) having a wall (12) of multiple layers of polymer including a barrier layer (38), and open ends (14,16), each end having an end surface extending around the periphery of the respective end. A mold (20) is formed having a first section (22) and a second section (24) facing the first section (22), the mold forming a cavity between the two mold sections (22,24) when the mold (20) is closed, and defining surfaces to which the parison conforms when the mold (20) is closed. The mold sections are closed on the parison (10) such that in the mold (20) at each end of the parison a first portion of each end surface is compressed against a second portion of the respective end surface. The mold sections (22,24) are further closed on the parison such the barrier layer (38) of the first portion and second portion of the end surface at each parison end are joined and welded mutually along a seal line. Then the mold (20) is opened and a hollow, formed tank is removed from the mold (20).

## Description

### BACKGROUND OF THE INVENTION

### 1. Field of the Invention

The present invention relates generally to a hollow parison made of polymer. More particularly, the invention pertains to molding a hollow parison formed of multiple plastic layers to form a tank or reservoir for containing fluid.

### 2. Description of the Prior Art

Blow molding is a manufacturing process used to form a hollow container such as that for use in an automotive vehicle as a fuel tank or reservoir. The blow molding process essentially includes the steps of: Extruding a parison (cylindrical tube) of multilayer plastic having open axial ends and a circular cross section. After the parison reaches the proper length, the mold closes on the parison, thereby sealing the open ends of the parison. Air inflates the parison forcing it to conform to the shape of the mold. The mold is cooled to remove heat from the blown parison. When the blown parison cools sufficiently, the mold opens and the formed, sealed part is removed.

The multi-layer material of the parison is typically constructed of an outer layer of high density polyethylene (HDPE), a middle barrier layer such as ethylene-vinyl alcohol (EVOH), and an inner HDPE layer. Binder or adhesive layers are located between the HDPE and EVOH to promote adhesion of the layers. Also, scrap material, called regrind, is sometimes incorporated into the multilayer construction and is typically located between the outer HDPE layer and the binder layer.

Manufactures of motor vehicle are subject to standards that provide for a significant reduction in the permissible volume of liquid and vapor hydrocarbons, which can escape into the ambient environment from on-board containers. In the field of zero emission vehicle standards a classification called "PZEV" exists, which results in the allowance of only extremely low levels of fuel-based emissions. The barrier layer has extremely low permeability to fluids, both liquids and gases contained in the molded part manufactured from the hollow parison. A purpose of this multi-layer material is to provide a barrier layer that prevents hydrocarbon emissions through the composite polymer structure while the part is in service.

When the multi-layer parison is sealed-off by closing the mold on the parison, two sets of multilayer wall structures are compressed together to seal the parison such that the barrier layers approach closure, but, in fact, they have a gap between them. This gap is a source of hydrocarbon leakage as it is a path of HDPE from the inside of the tank to the outside and HDPE has a much higher permeation level than the barrier material. Extensive work has been done to close the barrier layers, but without success. Additional work has been done with post molding processes to add additional materials with barrier properties over the pinch off in an effort to block the path of permeation through the pinch off. These post molding processes are expensive and have marginal value in reducing pinch off emissions.

There is a need in the industry for a method of manufacturing a part that will eliminate the gap, or reduce the size of the gap between the barrier layers sufficiently such that PZEV emission requirements can be met with a molded polymer fuel tank.

### SUMMARY OF THE INVENTION

The barrier layer has extremely low permeability to fluids, both liquids and gases contained in the molded part, and is surrounded by layers of other material which protect the barrier layer against damage and provide stiffness and strength to the formed part. The method for forming tank or reservoir minimizes or closes the gap in the barrier layer such that PZEV level emission requirements are achieved. A tank or reservoir made by the forming method has high rigidity at ordinary temperature and excellent impermeability to liquids and gases.

A method for manufacturing a molded part includes forming a parison having a wall of multilayer polymer composite material including a barrier layer, and open ends. A mold is used having a first part and a second part facing the first part, the mold forming a space between the two mold parts when the mold is closed, and defining surfaces to which the parison conforms when the mold is closed. The mold parts are closed on the parison such that in the mold at each end of the parison a first portion of each end surface is compressed against a second portion of the respective end surface. The mold parts are further closed on the parison such the barrier layer of the first portion and second portion of the end surface at each parison end are joined and welded mutually along a seal line. Then the mold is opened and the molded part formed of the hollow parison is removed from the mold.

The scope of applicability of the preferred embodiment will become apparent from the following detailed description, claims and drawings. It should be understood, that the description and specific examples, although indicating preferred embodiments of the invention, are given by way of illustration only. Various changes and modifications to the described embodiments and examples will become apparent to those skilled in the art.

### DESCRIPTION OF THE DRAWINGS

These and other advantages will become readily apparent to those skilled in the art from the following detailed description of a preferred embodiment when considered in the light of the accompanying drawings in which:
Figure 1 is a side isometric view of an extruded parison and an open mold surrounding the parison;
Figure 2 is a side view of the mold of Figure 1 closed on the parison and showing the parison formed to the shape of the inner surface of the mold;
Figure 3 is an end view showing the layers of polymer material comprising a wall of the parison of Figure 1;
Figure 4 is a side view of the pinch area on the mold at one of the axially opposite ends of the parison, i.e., area 4 of Figure 2;
Figure 5 is a magnified cross section of the parison at the pinch of Figure 4;
Figure 6 is a magnified cross section of the parison at the pinch showing a later stage in the forming method than that of Figure 5;
Figure 7 is a side view of the pinch area with the mold partially closed and before the diametrically opposite sides mutually contact.

### DESCRIPTION OF THE PREFERRED EMBODIMENT

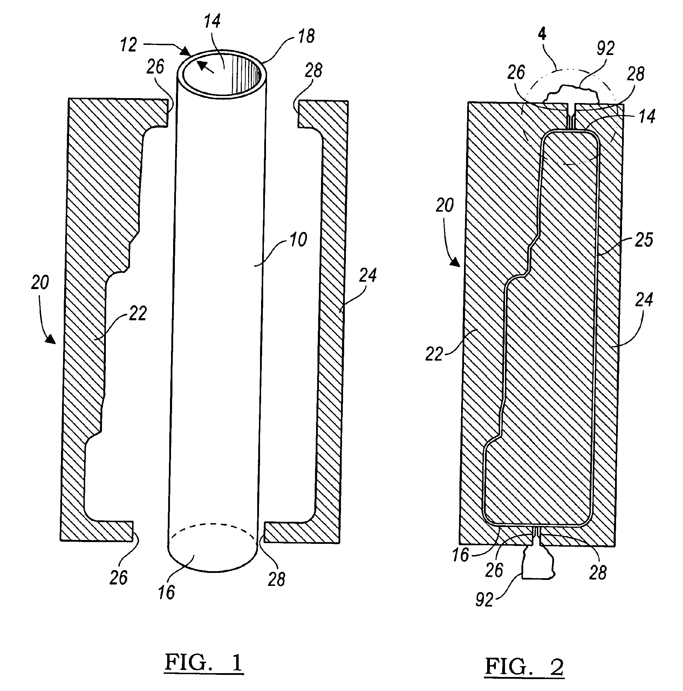

Figure 1 illustrates a parison 10, the workpiece, which is preferably in the form of a hollow, circular cylindrical tube having a wall 12 of multiple layers of plastic and open, unsealed axial ends 14, 16, each end having an surface 18 that extends circumferentially around the parison. The parison 10 is usually and preferably formed by extruding layers of polymer through the orifice of an extrusion die. The parison 10 is then surrounded by an open mold 20 having at least two sections 22, 24. As Figure 2 illustrates the mold 20 is closed on the parison 10, and the interior of the parison is pressurized forcing the parison to conform to the inner surface of the mold, thereby forming a sealed tank 25.

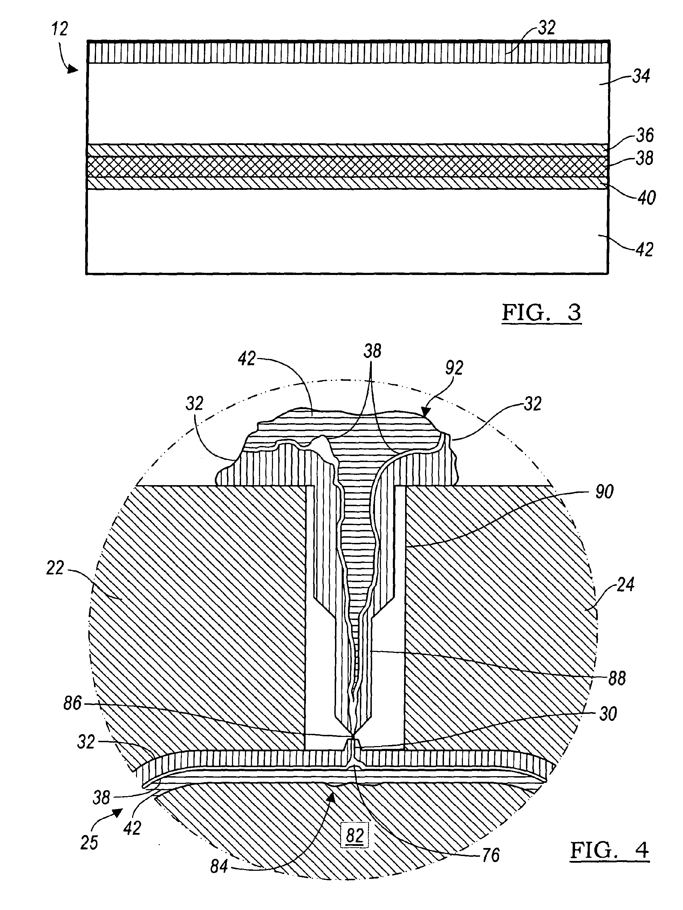

Figure 3 shows that the wall 12 includes a composite of various polymer layers including a relative thin outer layer 32 of high density polyethylene (HDPE), often with an added colorant; a thick layer of scrap material 34, called regrind, sometimes incorporated into the multilayer wall thickness; a thin layer of adhesive 36, called a binder; a thin layer of barrier material 38, such as ethylene-vinyl alcohol (EVOH) copolymer; a second layer of adhesive 40; and a relatively thick, inner layer 42 of HDPE. The binder layers 36, 40 located between the HDPE and EVOH materials promote adhesion of the barrier material to the adjacent layers. To insure proper results the barrier layer 38 must represent an as extruded nominal minimum of 2.5% of the total minimal thickness of the parison 10.

When the parison 10 is fully formed after processing in the mold 20, it may be used as a fuel tank in a motor vehicle. The wall 12 is formed as a composite of multiple layers to prevent hydrocarbons emitted by fuel carried in the tank from passing through the thickness of the wall 12 to the ambient atmosphere. The HDPE layer 42 provides the inner surface of the tank and is in contact with gasoline or another fluid contained in the tank and provides flexural stiffness and strength.

The parison 10 contains at least one barrier layer 38 located within the multi-layer polymeric structure and surrounded on both sides by at least one layer of plastic having relatively insignificant barrier properties. The term "barrier layer" means a layer that has very low permeability to gases and liquids. It generally contains a barrier resin. Any known barrier resin may be present in the hollow parison, provided that it is effective with respect to the fluids likely to be in contact with the container, particularly hydrocarbons. Non-limiting examples of possible resins for the barrier layer 36 include polyamides or copolyamides and random copolymers of ethylene and of vinyl alcohol. A blend of different barrier resins is also possible.

The open axial ends 14, 16 of the parison 10 are closed in mold 20, such as that shown in Figures 1 and 2. The mold 20 is preferably formed in two sections, a left section 22 and a right section 24, which are designed to be closed on the cylindrical parison 10, thereby closing and sealing the ends 14, 16. When the mold 20 is closed, the mold sections 22, 24 are in close proximity at parting planes 26, 28, but are mutually spaced at the ends 14, 16. When the mold 20 is closed, the parting planes 26, 28 are in mutual contact along other portions of the length of the parison 10.

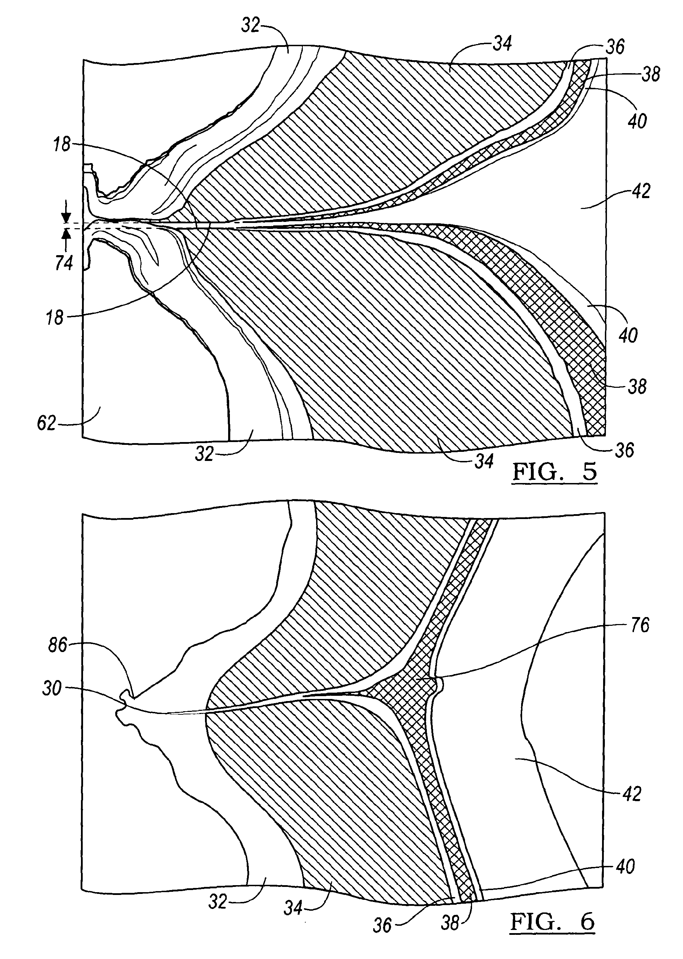

When the parison 10 is initially located in the mold 20 and the parison is molten, the left and right mold sections 22 and 24 are pressed together closing around the parison 10 such that the circumferential edges of the open ends 14, 16 are welded along a seal line 30, which is seen best in Figure 5 . This action seals the open ends 14, 16 along the seal line 30, which runs across the ends of the parison 10, substantially along a diameter of the parison. Sealing of the open ends 14, 16 occurs by a procedure called "pinch off."

Before the ends 14, 16 of the parison 10 are sealed by closing the mold 20, the layers 32, 34, 36, 38, 40, 42 at the circumferential edges of the parison ends 14, 16 located on opposite side of the seal line 30 are mutually aligned in the mold, are molten, and are compressed together at the seal line 30 as the mold closes. As the barrier layers 38 approach closure, they have a narrow gap74 between them, which gap is a potential source of hydrocarbon leakage. As the mold 20 closes around the parison 10, force in the plane of the edges caused by the closing mold compresses the two multilayer structures closing and sealing the barrier layers 38 at the ends 14, 16 of the parison. When the mold is fully closed, the material of the parison wall 12 at opposite sides of the seal line 30 at each end 14, 16 of the parison becomes sealed at the pinch. A magnified cross section at the seal line 30 appears as shown in Figure 6.

Figures 5 and 6 illustrate highly magnified cross sections of the seal line 30 at two stages of the forming method. Figure 5 shows the gap 74, which forms a narrow passageway, through which minor amount of hydrocarbons can be emitted to atmosphere. The close proximity and long length-over-width ratio minimizes the ability of hydrocarbons to permeate through the gap to the atmosphere. Pressurized air inflates the parison 10 forcing its outer surface against and into conformity with the inner surfaces of the mold 20. The air pressure and cooling in the mold 20 reduces the heat in the article to create a solid form. Then the mold opens, and the molded part (fuel tank) is removed from the mold.

The parison 10 permanently acquires the shape of the inner surface of the mold 20 due to the concurrent application of internal pressure within the parison, the removal of heat through the mold, and circulation of the internal air, thereby causing the parison to cure or solidify. The parison 10 conforms to the shape of the mold by injecting a pressurized blow-molding fluid into the mold 20 through a needle or blow pin which penetrates through parison 10 such that the walls of the parison 10 press against the walls of the mold 20. Pressurized air is a preferred fluid of this purpose.

Referring now to Figure 5, the gap 74 is closed or minimized at the barrier layer 38 by using a combination of pinch design in the mold 20 of Figure 4 and processing techniques. The pinch-off design illustrated in Figure 4 consists of the tank side pinch 84, which extends from the mold cavity 82 to the pinch off 86. Figures 5 and 6 show magnified views of the parison 10 in the tank side pinch area 4 of Figure 2. Located outside of the pinch-off 86 is a first compression zone 88 and a second compression zone 90, which are designed to be narrower than the thickness of the two multilayer sections of parison 10 that are being joined together on seal plane 30 to seal the molded tank 25. The depth and length of compression zones 88 and 90 affect how much of parison 10 is compressed and can flow back into the mold to provide adequate material thickness at the pinch-off, and how much of parison 10 is guided into the outer flash pocket 92, which is of a depth greater than the thickness of parison 10. This arrangement combined with proper timing, mold position, and control of the speed at which the mold 20 closes on the parison 10 provides the desired pinch-off.

The nearly joined or welded/ fused barrier layer 38, shown in Figures 5 and 6, is entirely continuous across the ends 14, 16 of the parison and forms the seal line 30. By controlling the rate of compression in the pinch zones 88, 90, the flow of material comprising the multiple layers 32, 34, 36, 38, 40, 42 at the parison ends 14, 16 is controlled accurately.

After the molded tank 25 is removed from mold 20, the material outside of mold cavity 82, called flash or scrap 92, is separated from the tank 25 at the pinch off 86.

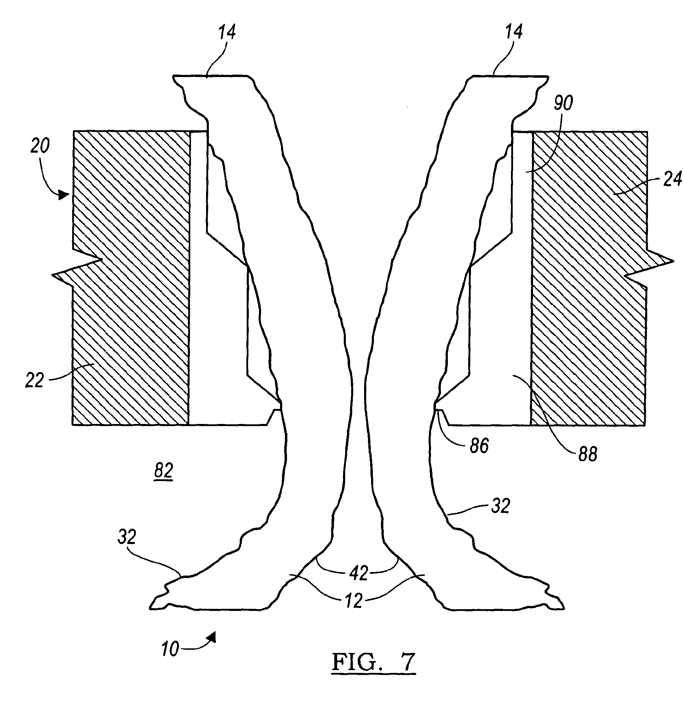

The process steps further include accurately controlling the time rate of displacement at which the mold 20 closes on the parison 10 depending on the position of the mold, i.e., the degree to which the mold is closed. The technique involves a three step process for closing the mold 20 on the parison 10. First, the mold 20 begins to close at a relatively fast rate (in the range of 250-600 mm per sec.) until the mold reaches the position shown in Figure 7 where its closure is slowed to prevent the diametrically opposite sides of the parison at each end 14, 16 from contacting mutually, thereby preventing the mold 20 from shearing the parison 10 and not flowing the parison in the pinch to provide sufficient material for a strong pinch off. Second, closure of the mold 20 continues at a slower closing speed (in the range of 10-100 mm per sec) until the mold reaches a defined position where most of the remaining compression of the inner layers 42 is yet to occur. Finally, the mold accelerates to a third speed, intermediate the first and second speeds (in the range 100- 250 mm per sec), to finish the pinch by bring the mold sections 22, 24 close together, preferably in the range 0.00 - 0.040 inches. By avoiding contact load between the mold sections 22, 24 at pinch 86, damage to the mold 20 is avoided.

The method closes the gap 74 by successively flowing, compressing and flowing the inner layers 42 and barrier layers 38 together near each parison end 14, 16, gap 74 is minimized or often eliminated and the barrier layers 38 are closed along the length of the seal lines 30 at both ends of the parison 10, as shown in Figure 6. Thereafter, the mold 20 opens and the parison 10, then in the form of a sealed fuel tank 25, is removed from the mold.

The term "plastic" means any material containing at least one polymer. Thermoplastic polymers are preferred. The term "polymer" means both homopolymers and copolymers. Examples of such copolymers include, without limitation, random copolymers, copolymers from sequenced polymerization, block copolymers and graft copolymers. Thermoplastic polymers also include thermoplastic elastomers and blends thereof.

Synthetic thermoplastics which have a melting range over at least 10°C are particularly well-suited to the application of the forming method. In particular, the hollow parison or may contain polyolefins, graft polyolefins, thermoplastic polyesters, polyketones, polyamides and copolymers thereof.

A polymer often present in the parison 10 is polyethylene. The forming method has produced excellent results with high density polyethylene (HDPE). A copolymer often used is the ethylene-vinyl alcohol (EVOH) copolymer. A blend of polymers or copolymers may also be used, as may a blend of polymeric substances with inorganic, organic and/or natural fillers.

By reducing the gap between the barrier layers, the most stringent PZEV emission requirements can be met with a blow molded, polymer fuel tank formed by the method using the described techniques.

Although the method is described with references to a parison 10, which when fully formed is used as a fuel tank for a motor vehicle, the method is applicable also to any hollow parison. The term "hollow parison" means any structure, which includes a wall surrounding at least one empty or hollow, concave part. Preferably, a hollow parison denotes a closed structure such as a reservoir or tank suitable for containing liquids, gases, or mixtures of liquids/gases. A hollow parison may have openings through its wall, which allowing communication with the external environment, and it may contain a fluid pump, level sensing equipment valves, and other components.

In accordance with the provisions of the patent statutes, the preferred embodiment has been described. However, it should be noted that the alternate embodiments can be practiced otherwise than as specifically illustrated and described.

## Claims

1. A method for blow molding a workpiece, the method comprising the steps of:
(a) forming a parison having a wall of multiple layers of polymer including a barrier layer, and open ends, each end having a end surface extending around the periphery of the respective end;
(b) forming a mold having a first section and a second section facing the first section, the mold forming a cavity between the two mold sections when the mold is closed, and defining surfaces to which the parison conforms when the mold is closed;
(c) closing the mold sections on the parison such that in the mold at each end of the parison, a first portion of each end surface is compressed against a second portion of the respective end surface;
(d) closing the mold sections further on the parison such the barrier layer of the first portion and second portion of the end surface at each parison end are joined and welded mutually along a seal line;
(e) opening the mold; and
(f) removing a formed part from the mold.

2. The method of claim 1 wherein step (d) further comprises:
closing the mold sections further on the parison such the layers of the first portion and second portion of the end surface at each parison end are joined and welded mutually along the seal line.

3. The method of claim 1 wherein step (d) further comprises:
closing the mold sections on the parison at a first, relatively high speed until the first portion and second portion of surfaces at each end form a seal line and the two mold halves are a first predetermined distance apart.

4. The method of claim 3 wherein step (d) further comprises:
closing the mold sections further on the parison at a second speed that is slower than the first speed until the two mold sections are a second predetermined distance apart that is less than the first predetermined distance.

5. The method of claim 4 wherein step (d) further comprises:
closing the mold sections further on the hollow parison at a speed that is intermediate the first speed and the second speed.

6. The method of claim 1 wherein step (a) further comprises the step of extruding a hollow cylindrical tube, each end having an edge extending around a perimeter of a respective end of the tube.

7. The method of claim 1 further comprising:
closing the mold sections; and
shaping the parison to the inner surfaces of the mold by injecting a fluid at elevated pressure into the mold, thereby forcing the parison against the inner surfaces of the mold.

8. The method of claim 1 wherein the first and second portions of the two barrier layers at the end surfaces are welded over at least a portion of the length of the seal line.

9. The method according to claim 1, wherein the hollow parison removed from the mold is a fuel tank.

10. The method of claim 1 wherein the method is twin sheet thermoforming and two sheets of polymer located at an end of the parison are sealed mutually to form the workpiece.

11. The method of claim 1 further comprising:
cooling an outer surface of the parison before closing the mold, the cooling being sufficient to change the viscosity of said outer surface relative to the viscosity of other layers in the parison.

12. A method for blow molding a workpiece, the method comprising the steps of:
(a) forming a parison having a wall of multiple layers of polymer including a barrier layer, and open ends, each end having a end surface extending around the periphery of the respective end;
(b) forming a mold having a first section and a second section facing the first section, the mold forming a cavity between the two mold sections when the mold is closed, and defining surfaces to which the parison conforms when the mold is closed;
(c) closing the mold sections on the parison such that in the mold at each end of the parison a first portion of each end surface is compressed against a second portion of the respective end surface;
(d) closing the mold sections further on the parison at a first, relatively high speed until the first portion and second portion of surfaces at each end form a seal line and the two mold halves are a first predetermined distance apart;
(e) closing the mold sections further on the parison at a second speed that is slower than the first speed until the two mold sections are a second predetermined distance apart that is less than the first predetermined distance;
(i) closing the mold sections further on the parison at a speed intermediate the first speed and the second speed until the barrier layer of the first portion and second portion of the end surface at each parison end are joined and welded mutually along a seal line;
(j) opening the mold; and
(k) removing the workpiece from the mold.

13. The method of claim 12 wherein step (a) further comprises the step of extruding a hollow cylindrical tube having opposite ends, each end having a circumferential edge extending around a perimeter of a respective end of the tube.

14. The method of claim 12 wherein step (d) further comprises:
shaping the parison to the inner surfaces of the mold by injecting a fluid at elevated pressure into the mold, thereby forcing the parison against the inner surfaces of the mold.

15. The method of claim 12 wherein the first and second portions of the two barrier layer materials at the end surfaces are welded over at least a portion of the length of the seal line.

16. The method of claim 12, wherein the workpiece removed from the mold is a fuel tank.

17. The method of claim 12 wherein the method is twin sheet thermoforming and two sheets of polymer located at an end of the parison are sealed mutually to form the workpiece.

18. The method of claim 12 further comprising:
cooling an outer surface of the parison before closing the mold, the cooling being sufficient to change the viscosity of said outer surface relative to the viscosity of other layers in the parison.
